# EUROPEAN PATENT APPLICATION

(11) **EP 0 893 900 A2**
(43) Date of publication of application: **27.01.1999**
(21) Application number: 98113817.5
(22) Date of filing: 23.07.1998
(51) Int. Cl.: H04L 27/00

(54) **Modulator**

(30) Priority: 24.07.1997 JP 198919/97
(71) Applicant: MATSUSHITA ELECTRIC INDUSTRIAL CO., LTD., Kadoma-shi, Osaka-fu (JP)
(72) Inventor: Tanaka, Koichiro, Takarazuka-shi, Hyogo-ken (JP); Oue, Hiroshi, Neyagawa-shi, Osaka-fu (JP); Shouno, Kazuhiro, Kawanishi-shi, Hyogo-ken (JP)
(74) Representative: Altenburg, Udo, Dipl.-Phys.

(57) **Abstract**

A low frequency signal generating portion 1 generates a first discrete signal (a signal sampled at a first sampling rate f₁). A band pass portion 2 operates at a second sampling rate f₂, performs frequency selecting operation to a second discrete signal generated when the first discrete signal generated by the low frequency signal generating portion 1 is inputted, and generates a modulated signal with a prescribed center frequency.

## Description

### BACKGROUND OF THE INVENTION

### Field of the Invention

This invention relates to modulators, and more specifically to a modulator for modulating a carrier wave with a transmission signal to be transmitted.

### Description of the Background Art

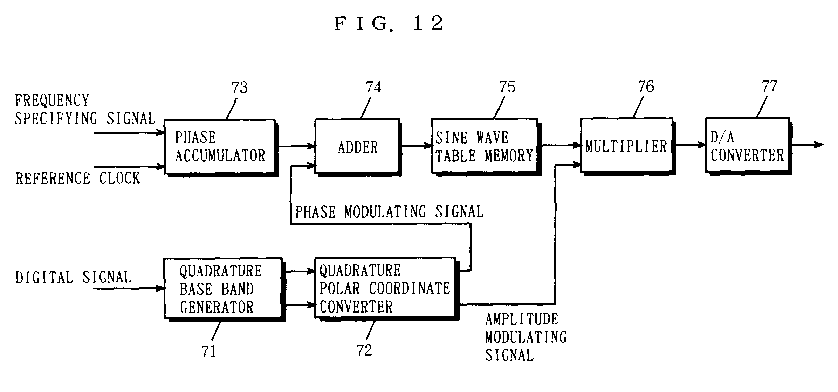

First, a modulator disclosed in Japanese Patent Laying-Open No. 6-152675 (hereinafter referred to as "first modulator") is described referring to FIG. 12 showing its block structure. In FIG. 12, the first modulator is a device for modulating a carrier wave with a transmission signal to generate a modulated signal, including a quadrature base band generator 71, a quadrature polar coordinate converter 72, a phase accumulator 73, an adder 74, a sine wave table memory 75, a multiplier 76, and a D/A converter 77.

The quadrature base band generator 71 converts an input digital signal into a quadrature base band signal. When a modulated signal is represented as the synthesis of two carriers orthogonal to each other, the quadrature base band signal represents amplitude and phase of these carriers. The quadrature polar coordinate converter 72 converts the quadrature base band signal into a phase modulating signal and an amplitude modulating signal. When the modulated signal is represented in a polar coordinate system, the phase modulating signal and the amplitude modulating signal represent phase and amplitude of the modulated signal. The adder 74 adds the phase modulating signal to an output from the phase accumulator 73. The sine wave table memory 75 outputs a carrier signal of a sine wave based on an output from the adder 74. The multiplier 76 multiplies the carrier signal by the amplitude modulating signal. Thus, the first modulator generates a modulated signal with prescribed variations in phase and amplitude.

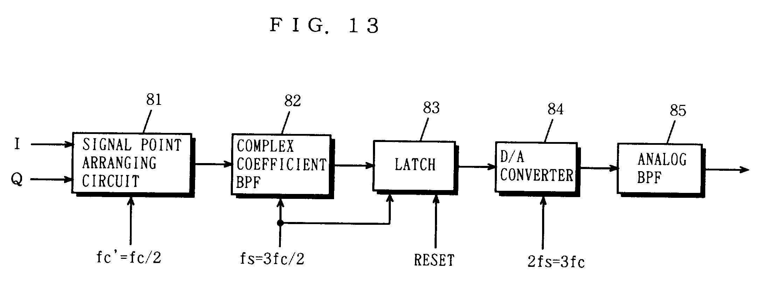

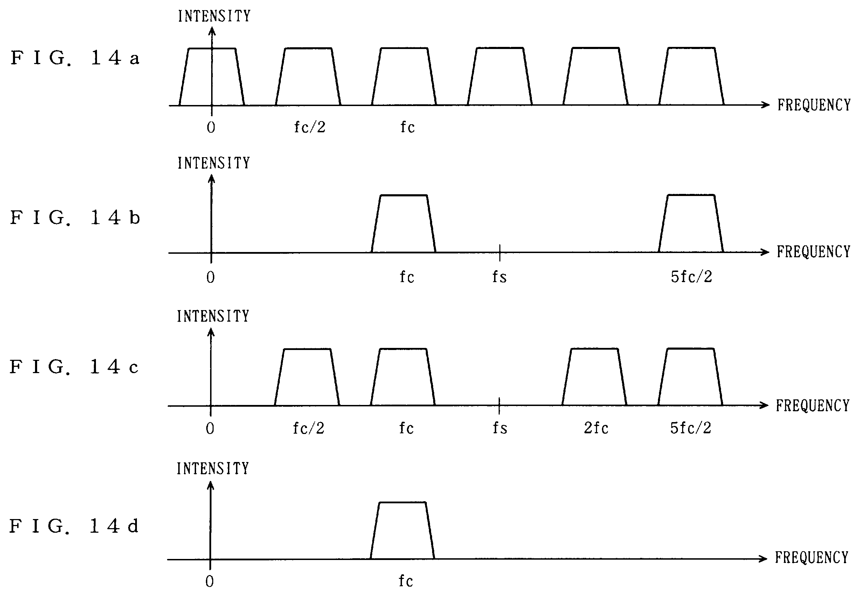

Next, a modulator disclosed in Japanese Patent Laying-Open No. 6-244883 (hereinafter referred to as "second modulator") is described referring to FIG. 13 showing its block structure and FIGS. 14a to 14d showing output waveforms from each component.

In FIG. 13, the modulator includes a signal point arranging circuit 81, a complex coefficient BPF (Band Pass Filter) 82, a latch 83, a D/A converter 84, and an analog BPF 85, and performs modulation without generating a trigonometric function.

The signal point arranging circuit 81 outputs a quadrature base band signal. The quadrature base band signal is a signal sampled at a sampling rate f_{c}/2, and thus has harmonic components of an integral multiple of f_{c}/2, as shown in FIG. 14a. The complex coefficient BPF 82 converts the quadrature base band signal into a complex band signal to select a prescribed frequency band. Therefore, as shown in FIG. 14b, in the quadrature base band signal shown in FIG. 14a, only components in the prescribed frequency band are selected. The latch circuit 83 and the D/A converter 84 multiply a real signal component of the complex band signal by a pulse whose duty ratio is smaller than 1 to perform pulse amplitude modulation. The analog band pass filter 85 extracts a desired harmonic component in the output from the D/A converter 84. Here, since the D/A converter 84 converts only the real signal component, the output signal from the D/A converter 84 causes aliasing components of the signal shown in FIG. 14b folded at fₛ, an operating frequency of the complex coefficient BPF 82, as shown in Fig. 14c. The analog BPF 85 extracts only a prescribed harmonic component in the output signals from the D/A converter 84 to generate a modulated signal as shown in FIG. 14d.

As described above, the first modulator has one trigonometric function generating portion composed of the phase accumulator 73 and the sine wave table memory 75. The trigonometric function generating portion operates with a clock at least more than double the frequency of the above carrier signal (the center frequency of the modulating signal). That is, it is necessary for the first modulator to operate the trigonometric function generating portion, which is a complicated circuit, with a frequency at least more than double the modulating wave frequency, disadvantageously resulting in increases in a circuit size and power consumption.

Like the second modulator, it is possible to construct a modulator without using a trigonometric function generating portion. However, in this case, since an analog band pass filter is required, it is not suitable for integration of a circuit. Further, in the second modulator, the center frequency of the modulating signal is limited to an integer multiple of fc/2, it can not be disadvantageously changed easily.

### SUMMARY OF THE INVENTION

Therefore, an object of the present invention is to provide a modulator allowing a small circuit size and low power consumption, capable of simply varying a center frequency of a modulating signal and further suitable for integration.

A first aspect of the present invention is a device for modulating a carrier wave with a transmission signal to be transmitted, including:
a discrete signal generating portion for sampling the transmission signal inputted from outside at a first sampling rate and generating a discrete signal; and
a band pass portion for operating at a second sampling rate higher than the first sampling rate when the discrete signal generated in the discrete signal generating portion is inputted and executing band selection for selecting a signal which exists in a prescribed frequency band.

In the first aspect, since the band pass portion operates at the second sampling rate, inputting a discrete signal sampled at the first sampling rate is the same as inputting a discrete signal obtained by sampling the first discrete signal at the second sampling rate. The band pass portion executes band selection with respect to the discrete signal, selecting only a signal which exists in a prescribed frequency band as a modulated signal (a signal obtained by modulating a carrier with the transmission signal to be transmitted).

As described above, the band pass portion operates at the second sampling rate and simply executes band selecting operation. Now assume that the trigonometric function generating portion of the conventional modulator operates at the second sampling rate. The structure of the trigonometric function generating portion is complicated. Thus, power consumption of the band pass portion is small compared with that of the trigonometric function generating portion. Further, since the discrete signal generating portion preceding to the band pass portion operates at the first sampling rate which is relatively low, it is possible to make power consumption low.

Further, in the first aspect, unlike the conventional modulator, it is possible to generate a modulating signal without using the trigonometric function generating portion whose circuit structure is complicated.

Therefore, in accordance with the first aspect, it is possible to make the circuit size small and power consumption low in the modulator.

According to a second aspect, in the first aspect, the discrete signal generating portion is composed of a low pass filter for operating at the first sampling rate when the transmission signal is inputted from outside and passing only a signal which exists in low frequencies.

As described above, the discrete signal generating portion generates a discrete signal using only a low pass filter which operates at the first sampling rate. Therefore, in accordance with the second aspect, it is possible to make the circuit size small and power consumption low in the modulator.

According to a third aspect, in the first aspect, the transmission signal is previously band-limited, and the discrete signal generating portion is composed of an interpolating filter for, when the transmission signal is inputted from outside, interpolating the transmission signal at the first sampling rate.

As described above, the discrete signal generating portion generates a discrete signal using only an interpolating filter for interpolating the transmission signal at the first sampling rate. Therefore, in accordance with the third aspect, it is possible to make the circuit size small and power consumption low in the modulator.

According to a fourth aspect, in the first aspect, the transmission signal is previously band-limited and sampled at the first sampling rate, and the discrete signal generating portion includes a trigonometric function generating portion for generating a trigonometric function with a prescribed frequency, and a multiplying portion for, when the transmission signal is inputted from outside, multiplying the transmission signal by the trigonometric function generated in the trigonometric function generating portion.

In accordance with the fourth aspect, since the discrete signal generating portion includes a trigonometric function generating portion and a multiplying portion, it is possible to freely shift the center frequency of the discrete signal. Thus, it is possible to arbitrarily set the center frequency of the modulating signal. The trigonometric function generating portion and the multiplying portion are structural components of the discrete signal generating portion and thus operate at the first sampling rate which is relatively low, also allowing low power consumption .

According to a fifth aspect, in the first aspect, the discrete signal generating portion includes a low pass filter for, when the transmission signal is inputted from outside, passing only a signal which exists in low frequencies, and an interpolating filter for interpolating the transmission signal band-limited by the low pass filter at the first sampling rate.

In accordance with the fifth aspect, since the discrete signal generating portion includes a low pass filter and an interpolating filter, the transmission signal does not have to be band-limited nor sampled at the first sampling rate. Therefore, this improves usability of the modulator. Further, in the fifth aspect, unlike the conventional modulator, it is possible to generate a modulating signal without using the trigonometric function generating portion whose circuit structure is complicated. Therefore, in accordance with the fifth aspect, it is possible to make the circuit size small and power consumption low compared to the conventional modulator.

According to a sixth aspect, in the first aspect, the discrete signal generating portion includes a low pass filter for, when the transmission signal is inputted from outside, operating at the first sampling rate and passing only a signal which exists in low frequencies, a trigonometric function generating portion for generating a trigonometric function with a prescribed frequency, and a multiplying portion for multiplying an output signal from the low pass filter by the trigonometric function generated in the trigonometric function generating portion.

In accordance with the sixth aspect, since the discrete signal generating portion includes a low pass filter, the transmission signal does not have to be band-limited. Thus, this improves usability of the modulator. Further, in accordance with the sixth aspect, since the discrete signal generating portion includes a trigonometric function generating portion and a multiplying portion, as in the fourth aspect, it is possible to arbitrarily set the center frequency of the modulating signal. Furthermore, these portions operate at a relatively low speed, allowing low power consumption of the modulator.

According to a seventh aspect, in the first aspect, the transmission signal is previously band-limited, and the discrete signal generating portion includes an interpolating filter for interpolating the transmission signal inputted from outside and band-limited and then outputting a result at said first sampling rate, a trigonometric function generating portion for generating a trigonometric function with a prescribed frequency, and a multiplying portion for multiplying an output signal from the interpolating filter by the trigonometric function generated in the trigonometric function generating portion.

In accordance with the seventh aspect, since the discrete signal generating portion includes an interpolating filter, the transmission signal does not have to be sampled at the first sampling rate. Thus, this improves usability of the modulator. Further, in accordance with the seventh aspect, since the discrete signal generating portion includes a trigonometric function generating portion and a multiplying portion, like the fourth aspect, it is possible to arbitrarily set the center frequency of the modulating signal. Furthermore, these portions operate at a relatively low speed, allowing low power consumption of the modulator.

According to an eighth aspect, in the first aspect, the discrete signal generating portion includes a low pass filter for, when said transmission signal is inputted from outside, passing only a signal which exists in low frequencies, an interpolating filter for interpolating the output signal from the low pass filter and then outputting a result at the first sampling rate, a trigonometric function generating portion for generating a trigonometric function with a prescribed frequency, and a multiplying portion for multiplying an output signal from the interpolating filter by the trigonometric function generated in the trigonometric function generating portion.

In accordance with the eighth aspect, since the discrete signal generating portion includes a low pass filter and an interpolating filter, the transmission signal does not have to be band-limited nor sampled at the first sampling rate. Thus, this improves usability of the modulator. Further, in accordance with the eighth aspect, since the discrete signal generating portion includes a trigonometric function generating portion and a multiplying portion, like the fourth aspect, it is possible to arbitrarily set the center frequency of the modulating signal. Furthermore, these portions operate at a relatively low speed, allowing low power consumption of the modulator.

According to a ninth aspect, in the first aspect, the band pass portion is composed of an IIR filter, and when the discrete signal generated in the discrete signal generating portion is inputted, the IIR filter operates at the second sampling rate and executes the band selection.

In accordance with the ninth aspect, since the band pass portion is composed of an IIR filter, it is possible to reduce the number of taps in the filter compared to an FIR filter in an eleventh aspect described below, and also to make the circuit size small and power consumption low in the modulator.

According to a tenth aspect, in the first aspect, the band pass portion is composed of a leapflog IIR filter, and when the discrete signal generated in the discrete signal generating portion is inputted, the leapflog IIR filter operates at the second sampling rate and executes the band selection.

In accordance with the tenth aspect, since the band pass portion is composed of a leapflog IIR filter, it is possible to reduce the accuracy of elements composing the filter compared to the IIR filter in the ninth aspect described above, and also to make the circuit size small and power consumption low in the modulator.

According to an eleventh aspect, in the first aspect, the band pass portion is composed of an FIR filter, and when the discrete signal generated in the discrete signal generating portion is inputted, the FIR filter operates at the second sampling rate and executes the band selection.

In accordance with the eleventh aspect, since the band pass portion is composed of an FIR filter, the degree of accuracy of elements composing the filter can be as low as the accuracy to be secured at input/output of the band pass portion. Thus, it is also possible to operate the FIR filter at a high speed.

According to a twelfth, thirteenth, fourteenth or fifteenth aspect, in the second, fifth, sixth, or eighth aspect, respectively, when the band pass portion includes an IIR filter or an FIR filter, the low pass filter has a frequency pass characteristic capable of compensating a frequency pass characteristic which the IIR filter or the FIR filter has.

When the band pass portion is composed of an IIR filter or an FIR filter, there are cases where amplitude and phase characteristics of the modulating signal are disturbed. Therefore, in accordance with the twelfth to fifteenth aspects, the band pass filter is provided with the above described frequency pass characteristic. This improves the quality of the modulated signal.

According to a sixteenth, seventeenth, eighteenth, or nineteenth aspect, in the fourth, sixth, seventh, or eighth aspect, respectively, the band pass portion multiplies the currently inputted signal by a coefficient stored therein at the time of executing the band selection, and before the band selection operation is executed, the multiplying portion determines the coefficient based on the trigonometric function generated in the trigonometric function generating portion and the coefficient determined in the multiplying portion is stored in the band pass portion.

As described above, the trigonometric function generating portion and the multiplying portion determines the coefficient of the band pass portion. In accordance with the sixteenth to nineteenth aspects, it is not necessary to additionally add a structure for determining the coefficient of the band pass portion, allowing a small circuit size of the modulator.

According to a twentieth aspect, in the first aspect, the discrete signal generating portion and the band pass portion are both constructed of elements for executing digital signal processing.

In accordance with the twentieth aspect, since analog elements are not used, the modulator is suitable for integration.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram of a modulator according to a first embodiment of the present invention;
FIGS. 2a and 2b are diagrams showing time waveforms of a first discrete signal and a second discrete signal generated from a low frequency signal generating portion 1 and a band pass portion 2;
FIGS 3a to 3c are diagrams showing spectrums of the first discrete signal generated from the low frequency signal generating portion 1, the second discrete signal generated from the band pass portion 2 shown in FIG. 1, and a modulated wave;
FIGS. 4a and 4b are diagrams showing spectrums of the first discrete signal and the second discrete signal when the center frequency of the first discrete signal is 0;
FIGS. 5a and 5b are diagrams of spectrums of the first discrete signal and the second discrete signal when the center frequency of the first discrete signal is not 0;
FIG. 6 is a block diagram showing the detailed structure of the low frequency signal generating portion 1 shown in FIG. 1;
FIG. 7 is a block diagram showing the detailed structure of an IIR filter which is an example of structure of the band pass portion 2 shown in FIG. 1;
FIG. 8 is a block diagram showing the detailed structure of a leapflog filter, which is an example of structure of the band pass portion 2 shown in FIG. 1;
FIG. 9 is a block diagram showing the detailed structure of each integrator 17 included in the leapflog filter shown in FIG. 8;
FIG. 10 is a block diagram showing the detailed structure of an FIR filter, which is an example of structure of the band pass portion 2 shown in FIG. 1;
FIG. 11 is a block diagram of a modulator according to a second embodiment of the present invention;
FIG. 12 is a block diagram showing the structure of a conventional modulator disclosed in Japanese Patent Laying-Open No. 6-152675;
FIG. 13 is a block diagram showing the structure of a conventional modulator disclosed in Japanese Patent Laying-Open No. 6-244883; and
FIGS. 14a to 14d are diagrams showing spectrums of signals outputted from each component included in the modulator shown in FIG. 13.

### DESCRIPTION OF THE PREFERRED EMBODIMENTS

Described in detail below are embodiments of the present invention according to the attached drawings.

### (First embodiment)

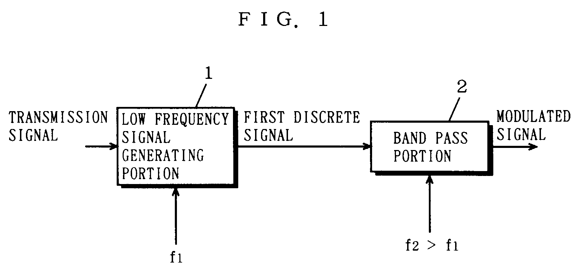

FIG. 1 is a block diagram showing the structure of a modulator according to a first embodiment of the present invention. In FIG. 1, the modulator includes a low frequency signal generating portion 1 (corresponding to "discrete signal generating means" in claims) and a band pass portion 2.

The low frequency signal generating portion 1 samples a signal to be transmitted inputted from outside (hereinafter referred to as "transmission signal") at a first sampling rate f₁ to generate and output a first discrete signal (corresponding to "discrete signal" in claims).

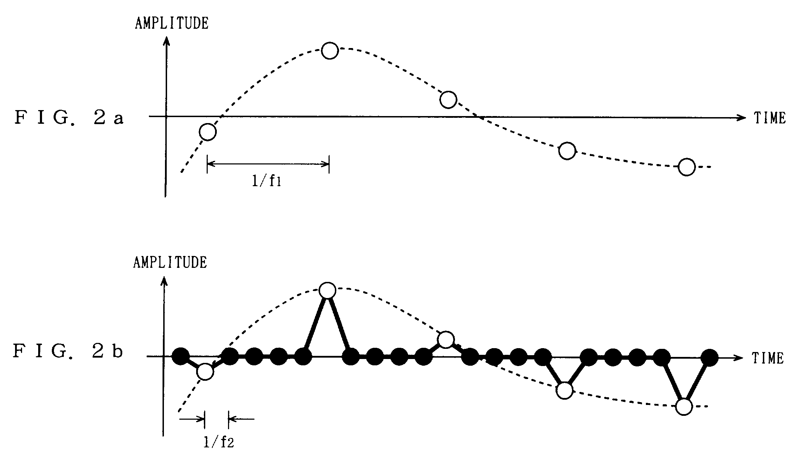

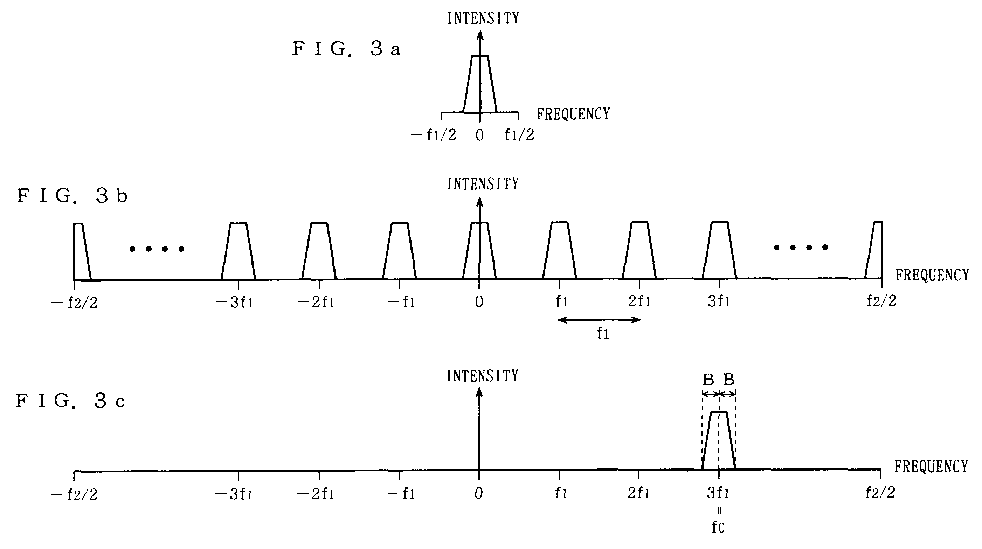

A time waveform of the first discrete signal is shown in FIG. 2a, and a spectrum of the first discrete signal is shown in FIG. 3a. In FIG. 2a, the transmission signal shown by a dotted line in the drawing is sampled as described above, and thus the first discrete signal is composed of a signal series shown by ○ marks in the drawing. Further, in FIG. 3a, a center of the spectrum of the first discrete signal is at a prescribed frequency (now assume "0"). In order to clarify the description, only the spectrum within a frequency band of ±f₁/2 is shown in FIG. 3a.

When the first discrete signal is inputted from the low frequency signal generating portion 1, the band pass portion 2 operates at a second sampling rate f₂ (f₂>f₁) to execute band selection which will be described later. At this time, the band pass portion 2 operates at f₂, resulting in, substantially, sampling the first discrete signal at f₂ to generate a second discrete signal.

A time waveform of the second discrete signal is shown in FIG. 2b, and a spectrum of the second discrete signal is shown in FIG. 3b. As shown in FIG. 2b, when the first discrete signal is sampled at f₂, since f₂>f₁, there are points where no first discrete signal exists. At this point, 0 occurs to form a signal series (refer to ● in the drawing). On the other hand, at points where the first discrete signal exists, a signal series corresponding to the amplitude of the first discrete signal (refer to ○ in the drawing) occurs. Therefore, the waveform of the second discrete signal is composed of a signal series shown by ○ and ● in the drawing. Further, in FIG. 3b, the spectrum of the second discrete signal exists at a position obtained by frequency-shifting the spectrum of the first discrete signal (refer to FIG. 3a) by an integral multiple of the frequency f₁. In order to clarify the description, only the spectrum which exists within a frequency band between -f₂/2 and +f₂/2 are shown in FIG. 3b.

The band pass portion 2 (refer to FIG. 1) selects only components which exist within a prescribed frequency band in the spectrum of the second discrete signal to output a modulated signal. Now, assuming that the frequency band selected by the band pass portion 2 is from 3f₁-B to 3f₁+B, the modulated signal has a spectrum as shown in FIG. 3c. The modulated signal is a signal obtained by modulating a carrier wave of a frequency 3f₁ using a transmission signal.

Here, described is a relation among the spectrums of the first discrete signal and the modulated signal, the first sampling rate f₁, and the second sampling rate f₂.

Now assume that a center frequency of the modulated signal to be outputted from the modulator is f_{c}, and its occupied frequency bandwidth is ±B having its center at f_{c}. At this time, at least 2(f_{c}+B) must be selected as f₂ according to a sampling theorem. f₂/n is selected as f₁ by dividing f₂ by an integer n. However, f₁>2B is required to prevent interference from an adjacent spectrum.

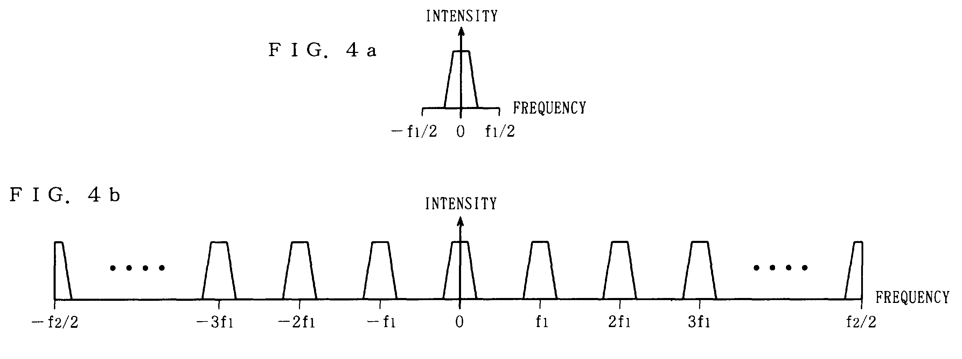

When the spectrum of the first discrete signal has a center at a frequency "0" as shown in FIG. 4a, the center of the spectrum of the second discrete signal obtained by sampling the first discrete signal at f₂ appears at positions, as shown in FIG. 4b, obtained by an integral multiple of f₁ based on the center frequency of the first discrete signal. That is, when k is assumed as an appropriate integer, f_{c}/k is selected as f₁.

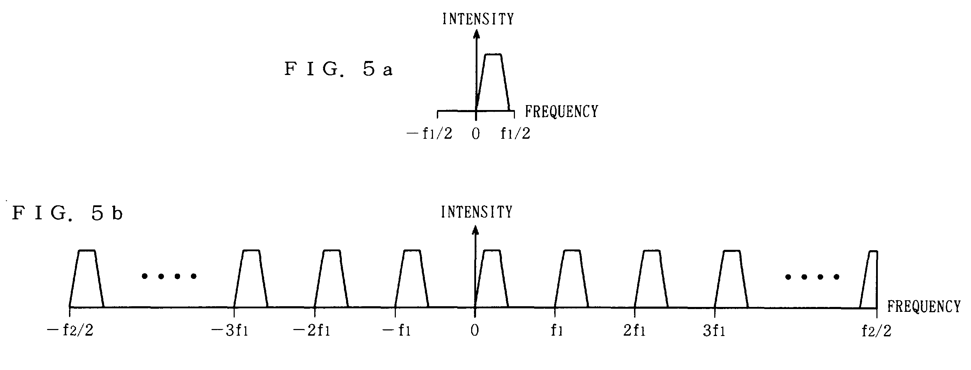

Furthermore, when the spectrum of the first discrete signal has a center at an arbitrary frequency as shown in FIG. 5a, the center of the spectrum of the second discrete signal obtained by sampling the first discrete signal at f₂ appears at positions, as shown in FIG. 5b, obtained by an integral multiple of f₁ based on the center frequency of the first discrete signal. That is, the center of the spectrum of the second discrete signal appears at each f₁, allowing being arbitrarily shifted in the frequency bandwidth of f₁. Therefore, when the spectrum of the first discrete signal has a center at an arbitrary frequency, it is possible to independently set f₁ and f_{c}.

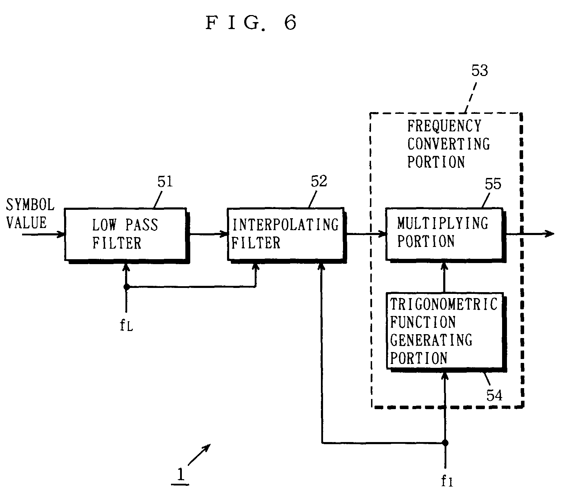

Described next is an example of structure of the low frequency signal generating portion 1 referring to FIG. 6. In FIG. 6, the low frequency signal generating portion 1 includes a low pass filter 51, an interpolating filter 52, and a frequency converting portion 53. Furthermore, the frequency converting portion 53 has a multiplying portion 55 and a trigonometric function generating portion 54 (refer to a portion surrounded by a dotted line in FIG. 6).

The low pass filter 51 executes root roll off filtering and the like with respect to a symbol value of a transmission signal inputted from outside, and then outputs a band-limited signal obtained by sampling the symbol value after filtering at a sampling rate f_{L}.

However, when the symbol value is previously band-limited, that is, when the band-limited signal is directly inputted into the low frequency signal generating portion 1, this low pass filter 51 is not required.

The interpolating filter 52 executes filtering to pass a low frequency portion at a sampling rate f₁ with respect to the band-limited signal inputted from the low pass filter 51 or outside, thereby interpolating the inputted band-limited signal at the first sampling rate f₁. That is, the interpolating filter 52 converts the sampling rate of the band-limited signal from f_{L} to f₁. An output signal from the interpolating filter 52 has the same spectrum as that shown in FIG. 3a. Here, typically, a rate obtained by dividing f₁ by an arbitrary integer is used as f_{L}. That is, f_{L}<f₁. In this way, by increasing of the sampling rate, an interval in the spectrum appearing when the output signal from the interpolating filter 52 is sampled at f₂ (refer to FIG. 2b) is widen. Thus, a moderate characteristic is enough for the characteristic of the band pass filter included in the following band pass portion 2, thereby allowing a small size of the band pass filter.

When the band-limited signal is originally sampled at large f_{L}, since the interval in the spectrum appearing when sampled at f₂ becomes large and a signal with the spectrum shown in FIG. 3a can be obtained without converting the sampling rate, and thus the interpolating filter 52 is not required.

The trigonometric function generating portion 54 included in the frequency converting portion 53 generates a trigonometric function with a prescribed frequency. As describe above, there are cases where the first discrete signal has an arbitrary center frequency other than 0 (refer to FIG. 5a). The frequency of the above trigonometric function defines its center frequency.

The multiplying portion 55 included in the frequency converting portion 53 multiplies the output signal of the interpolating filter 52 by the trigonometric function outputted from the trigonometric function generating portion 54 to shift the center frequency of the output signal.

In this way, the trigonometric function generating portion 54 and the multiplying portion 55 operate at f₁ which is lower than f₂ of the final sampling rate. On the other hand, it is required for the first modulator (refer to FIG. 12) to operate the phase accumulator 73 and the sine wave table memory 75, which correspond to the trigonometric function generating portion, at a clock rate which satisfies f₂≧2(f_{c}+B). Thus, the trigonometric function generating portion 54 and the multiplying portion 55 of the present modulator can make the circuit size small and power consumption low compared to the first modulator.

Further, the frequency converting portion 53 is required only when generating the first discrete signal as shown in FIG. 5a, and not required when generating the first discrete signal whose center frequency is "0" (refer to FIG. 3a).

Further, although the multiplying portion 55 has been described assuming that the output signal from the interpolating filter 52 is inputted thereto, there are cases, as is evident from the above, where the transmission signal is directly inputted from outside or the output signal from the low pass filter 51 is inputted.

Described next is an example of structure of the band pass portion 2. When the spectrum of the modulated signal generated by the present modulator is symmetrical as shown in FIG. 3c like an amplitude modulating signal and a BPSK (Binary Phase Shift Keying) modulating signal and the spectrum of the first discrete signal has a center at a frequency 0, the first discrete signal becomes a real signal. Therefore, as the band pass portion 2, a filter with real coefficients is used.

In other cases, that is, when the spectrum of the modulating signal is asymmetrical or when the spectrum of the first discrete signal has a center at an arbitrary frequency other than 0 as shown in FIG. 5a, the first discrete signal becomes a complex signal. Therefore, for the band pass portion 2, a filter with complex coefficients has to be used. However, since the frequency components to be selected by the band pass portion 2 are more than 0 and less than f₂/2, it is enough to output from the band pass portion 2 either of the real components or imaginary components among outputs from the complex coefficient filter.

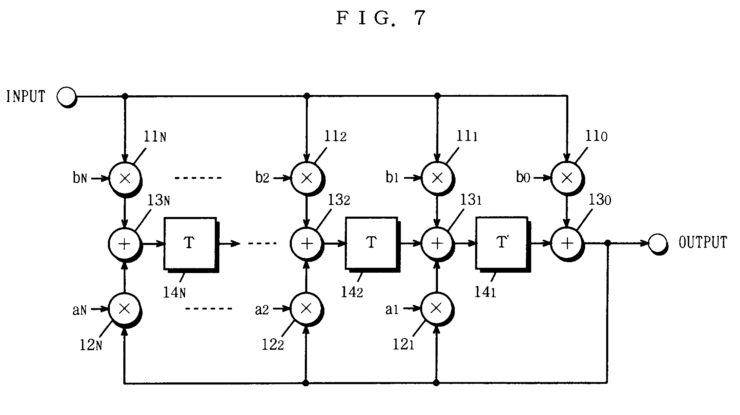

Specifically, the band pass portion 2 can be realized by using an IIR (Infinite Impulse Response) filer as shown in FIG. 7. In FIG. 7, the IIR filter includes multipliers 11₀ to 11_{N} for multiplying each input by coefficients b₀ to b_{N}, multipliers 12₁ to 12_{N} for multiplying each feedback value of output by coefficients a₁ to a_{N}, adders 13₀ to 13_{N} for adding a plurality of input values, and delay elements 14₁ to 14_{N} for giving delay T to the input values. The adder 13_{N} outputs a value obtained by adding two multiplied values inputted from the multiplier 11_{N} and the multiplier 12_{N} to the delay element 14_{N}. The adders 13_{(N-1)} to 13₁ adds two multiplied values inputted from the multipliers 11_{(N-1)} to 11₁ and the multipliers 12_{(N-1)} to 12₁ and values inputted from the delay elements 14ₙ to 14₂ to output the result to the delay elements 14_{(N-1)} to 14₁. The adder 13₀ adds the multiplied value inputted from the multiplier 11₀ and a value inputted from the delay element 14₁, and thus an output of the IIR filter can be obtained. Further, since the IIR filter performs the above operation at the second sampling rate f₂, when the first discrete signal is inputted, the IIR filter selects only components which exist within a prescribed frequency band in the spectrum included in the second discrete signal (refer to FIG. 3b and FIG. 5b) to generate a modulated signal.

By the way, for the IIR filter shown in FIG. 7, variations in the output values are susceptible to coefficients a₁ to a_{N} and b₀ to b_{N,} and thus the accuracy of operating elements constructing the filter has to be high. However, since the number of taps N of the IIR filter may be small, when the operating elements used for the filter have a high degree of accuracy, the size of the filter can be made small.

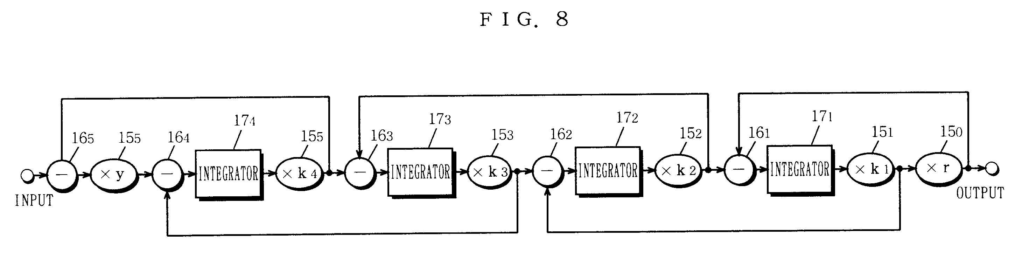

As a type of the IIR filter described above, a leapflog filter disclosed in "Analog Filter Design" (written by M. E. Van Valkenburg) is realized as shown in FIG. 8 with digital signal processing. The leapflog filter includes multipliers 15₀ to 15₅, subtracters 16₁ to 16₅, and integrators 17₁ to 17₄.

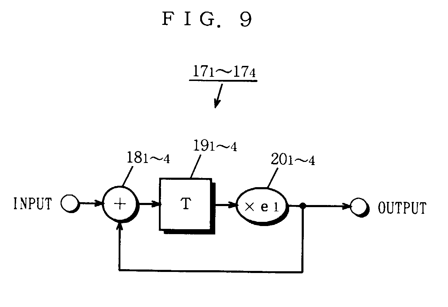

Further, in the leapflog filter, four state variables are used, and the integrators 17₁ to 17₄ hold one state variable each. The integrators 17₁ to 17₄ have, as shown in FIG. 9, adders 18₁ to 18₄, delay elements 19₁ to 19₄, and multipliers 20₁ to 20₄, respectively. The adders 18₁ to 18₄ add an input value and a feedbacked output value (output from the multipliers 20₁ to 20₄). The delay elements 19₁ to 19₄ give a delay value T to the output value from the adders 18₁ to 18₄. The multipliers 20₁ to 20₄ multiply the output value from the delay elements 19₁ to 19₄ by a coefficient e₁ and then output the results.

FIG. 8 is now referred again. A coefficient r of the multiplier 15₀ and a coefficient y of the multiplier 15₅ correspond to output step resistance and input step resistance when the filter is formed of an analog filter. Further, coefficients k₁ and k₃ of the multipliers 15₁ and 15₃ correspond to an inductance of the analog filter and coefficients k₂ and k₄ of the multipliers 15₂ and 15₄ correspond to a capacitance of the analog filter. The filter operates by feedbacking outputs from the multipliers 15₀ to 15₄ to the subtracter 16₁ to 16₄.

Also, like the IIR filter shown in FIG. 7, the leapflog filter as the band pass portion 2 selects components which exist in a prescribed frequency band from the spectrum included in the second discrete signal (refer to FIG. 3b and FIG. 5b) generated simply by input of the first discrete signal to generate a modulated signal.

By the way, variations in the output values of the leapflog filter are more unsusceptible to the coefficients of the filter than general IIR filters. Therefore, the accuracy of the operating elements constructing the leapflog filter can be made lower than those in the case of the general IIR filter.

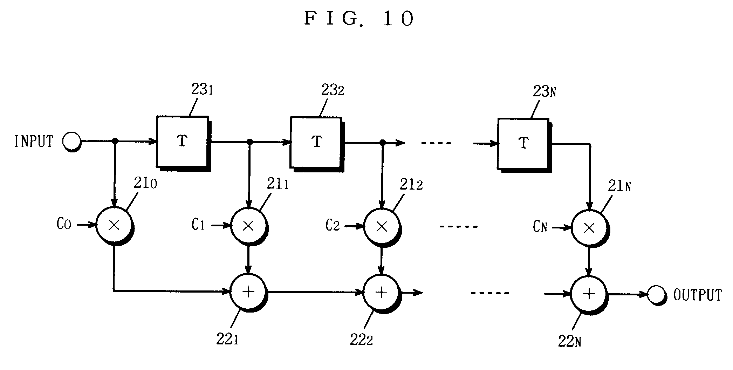

Further, the band pass portion 2 can be realized by using an FIR (Finite Impulse Response) filter as shown in FIG. 10. In FIG. 10, the FIR filter is composed of N taps, including multipliers 21₀ to 21_{N} for multiplying each input value thereto by coefficients c₀ to c_{N} and outputting the results, multipliers 23₁ to 23_{N} for giving each input value thereto a delay T and outputting the results, and adders 22₁ to 22_{N} for adding a plurality of input values and outputting the results. As is evident from FIG. 10, in the FIR filter, the multiplier 21₀ multiplies an input value by the coefficient c₀, and the multipliers 21₁ to 21_{N} multiplies output values from the delay elements 23₁ to 23_{N} by the coefficients c₁ to c_{N}. The delay element 23ᵢ (i is not less than 2) gives the output value of the delay element 23₍ᵢ₋₁₎ the delay T. Then, the results obtained by multiplying of the multipliers 21₀ to 21_{N} are synthesized by the adders 22₁ to 22_{N} to become an output of the FIR filter.

Further, like the IIR filter shown in FIG. 7 and the like, when the first discrete signal is inputted, the FIR filter as the band pass portion 2 selects only the components which exist in a prescribed frequency band in the spectrum of the second discrete signal (refer to FIG. 3b and FIG. 5b) to generate a modulated signal.

By the way, when the FIR filter is applied to the band pass portion 2, a large number of taps N is required. However, since the accuracy of the operating elements constructing the FIR filter can be as low as the accuracy to be secured at input/ output of the band pass portion 2, it is possible to operate the modulator at a high speed.

FIG. 10 shows principles of the FIR filter, and the number of multipliers in a practical circuit can be smaller than that shown in the drawing. That is, the second discrete signal generated in the FIR filter has a signal series in which most of the signals show 0 as shown in FIG. 2b. Then, before being inputted to the multipliers 21₀ to 21_{N}, the second discrete signal is given delay by the delay element of each preceding step. Therefore, not all of the multipliers 21 simultaneously output the results obtained by multiplying of non-0. Thus, in view of miniaturization of the modulator, it is effective that the FIR filter is constructed so as to include a small number of multipliers 21 and to perform filtering as switching to the multiplier 21 which outputs the result obtained by multiplying of non-0.

Further, when the IIR filter is used for the band pass portion 2, amplitude and phase characteristics of the output signal can be disturbed by the frequency. On the other hand, when the FIR filter is used, the amplitude characteristic of the output signal can be disturbed by the frequency. At this time, when the low frequency signal generating portion 1 (refer to FIG. 1) includes the low pass filter 51 (refer to FIG. 6) and the frequency pass characteristic of the filter 51 has a characteristic opposite to the above disturbance, it is possible to eliminate the disturbance in the amplitude and phase characteristics when viewed as the whole modulator.

The band pass portion 2, both of when including the IIR filter and when including the FIR filter, can freely vary the center frequency f_{c} only by rewriting each coefficient. Described below are values to be set as coefficients of the IIR and FIR filters. Generally, in order to realize the above IIR and FIR filters, an original filter which has the same frequency pass characteristic as that of the filters and whose center frequency is 0 is planned and thereby coefficients of the original filter are obtained. Then, the coefficients of the original filter are multiplied by sₖ shown in the following equation (1) to take the results as the coefficients of the IIR or FIR filter.${\text{s}}_{\text{k}} {\text{=cos2πkf}}_{\text{c}} {\text{/f}}_{\text{2}} {\text{+jsin2πkf}}_{\text{c}} {\text{/f}}_{\text{2}}$

However, k is a relative integer showing the number of sample delays when the input signal is multiplied by the coefficient. More specifically, for example, when s₀ is used, it is possible to obtain b₀ (refer to FIG. 7) and c₀ (refer to FIG. 10), and when s₁ is used, it is possible to obtain a₁ and b₁ (refer to FIG. 7), and c₁ (refer to FIG. 10). Other coefficients can be obtained in the same manner. f_{c} is a center frequency of the modulating signal, f₂ is the second sampling rate, and j is the imaginary unit.

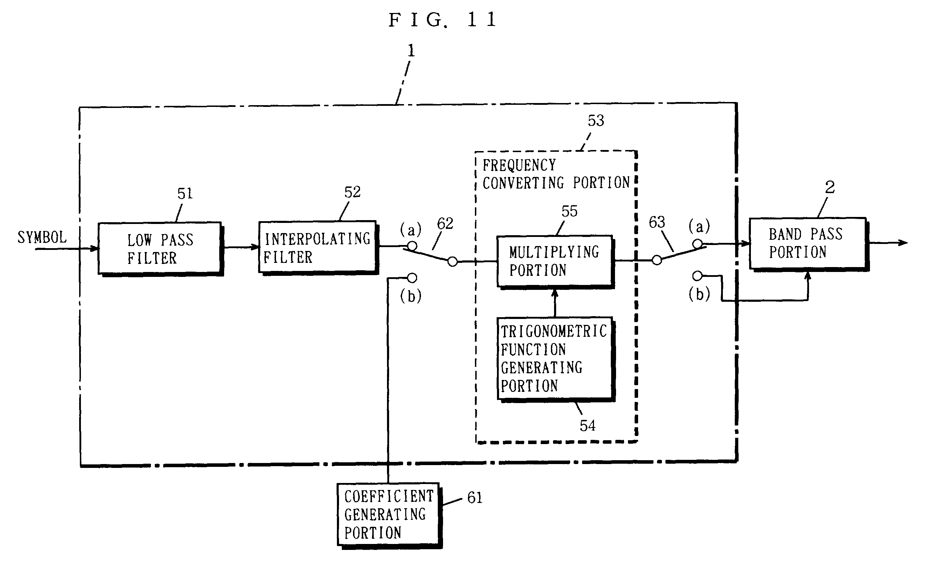

Since processing of multiplying the coefficient of the original filter by sₖ by the multiplying portion 55 corresponds to processing of multiplying by the trigonometric function as phases are varied by a prescribed increase, the processing is the same as frequency conversion processing by the frequency converting portion 53. Thus, when the low frequency signal generating portion 1 includes the frequency converting portion 53, the frequency conversion portion 53 can be used as a circuit for rewriting the coefficients of the IIR or FIR filter constructing the band pass portion 2. Described below is a modulator with such structure as a second embodiment referring FIG. 11 showing its block structure.

### (Second embodiment)

In FIG. 11, the modulator is different in that the modulator further includes a coefficient generating portion 61, compared to the modulator shown in FIG. 1. Since the general structure except the above is the same as that shown in FIG.1, corresponding structural parts are given the same reference numerals and their description is omitted. Further, in FIG. 11, the low frequency signal generating portion 1 is different only in that it further includes switches 62 and 63, compared to the low frequency signal generating portion 1 shown in FIG. 6, and thus other corresponding structural parts are given the same reference numerals and their description is omitted.

The coefficient generating portion 61 stores the coefficients of the original filter obtained as described above. A terminal (a) included in the switch 62 is connected to the interpolating filter 52, a terminal (b) included in the switch 62 is connected to the coefficient generating portion 61, and the interpolating filter 52 or the coefficient generating portion 61 is connected to the frequency converting portion 53 by switching. Further, a terminal (a) included in the switch 63 is connected to a signal input terminal of the band pass portion 2, a terminal (b) included in the switch 63 is connected to a coefficient input terminal of the band pass portion 2, and the signal input terminal or the coefficient input terminal is connected to the frequency converting portion 53 by switching.

Described next is operation of the modulator. When generating a modulating signal, both of the switches 62 and 63 select the terminal (a) to connect the interpolating filter 52 and the frequency converting portion 53. At this time, the operation of the modulator is evident from the first embodiment, and thus its description is omitted.

On the other hand, when varying the center frequency of the modulating signal, both of the switches 62 and 63 select the terminal (b) to connect the coefficient generating portion 61 and the frequency converting portion 53. Then, the coefficient of the original filter outputted from the coefficient generating portion 61 is outputted to the multiplying portion 55. To the multiplying portion 55, a trigonometric function is inputted from the trigonometric function generating portion 54, and the multiplying portion 55 multiplies the coefficient of the original filter by the trigonometric function to generate and output a coefficient of the IIR or FIR filter included in the band pass portion 2. The coefficients generated in the above manner are outputted to the band pass portion 2 and set in a register storing the coefficients of the IIR or FIR filter, and the like.

Here, described more specifically is operation when the multiplying portion 55 calculates the coefficients of the IIR or FIR filter. The multiplying portion 55 has to calculate the coefficients a₁ to a_{N} and b₀ to b_{N} when the IIR filter shown in FIG. 7 is used, the coefficient e1 when the leapflog filter shown in FIG. 8 and FIG. 9 is used, and the coefficients c₀ to c_{N} when the FIR filter shown in FIG. 10 is used. Now, all of these coefficients are generally called fₖ (k=0, 1, ..., N). Further, the coefficients of the original filter are generally called gₖ. At this time, the multiplying portion 55 uses sₖ shown in the above equation (1) to calculate ${\text{f}}_{\text{k}} {\text{=g}}_{\text{k}} {\text{·s}}_{\text{k}}$, and outputs the result to the band pass portion 2.

As described above, in the modulator according to the present embodiment, it is not required to use the trigonometric function generating portion, or if the trigonometric function generating portion is used, its operating rate is low, allowing a small circuit size and low power consumption. Further, the center frequency of the modulating signal can be varied by changing the coefficients of the filter (IIR or FIR) constructing the band pass portion as required. Further, although the modulator is convenient for integration if structural parts are each constructed by digital elements, they may be constructed by analog elements.

While the invention has been described in detail, the foregoing description is in all aspects illustrative and not restrictive. It is understood that numerous other modifications and variations can be devised without departing from the scope of the invention.

## Claims

1. A device for modulating a carrier with a transmission signal to be transmitted, including:
discrete signal generating means for sampling said transmission signal inputted from outside at a first sampling rate and generating a discrete signal; and
band pass means for operating at a second sampling rate higher than said first sampling rate when the discrete signal generated in said discrete signal generating means is inputted and executing band selection for selecting a signal which exists in a prescribed frequency band.

2. The modulator according to claim 1, wherein
said discrete signal generating means is composed of
a low pass filter for operating at said first sampling rate when said transmission signal is inputted from outside and passing only a signal which exists in low frequencies.

3. The modulator according to claim 1, wherein
said transmission signal is previously band-limited, and
said discrete signal generating means comprises
an interpolating filter for, when said transmission signal is inputted from outside, interpolating the transmission signal at said first sampling rate.

4. The modulator according to claim 1, wherein
said transmission signal is previously band-limited and sampled at the first sampling rate, and
said discrete signal generating means includes
trigonometric function generating means for generating a trigonometric function with a prescribed frequency, and
multiplying means for, when said transmission signal is inputted from outside, multiplying the transmission signal by the trigonometric function generated in said trigonometric function generating means.

5. The modulator according to claim 1, wherein
said discrete signal generating means includes
a low pass filter for, when said transmission signal is inputted from outside, passing only a signal which exists in low frequencies, and
an interpolating filter for interpolating the transmission signal band-limited by said low pass filter at said first sampling rate.

6. The modulator according to claim 1, wherein
said discrete signal generating means includes
a low pass filter for, when said transmission signal is inputted from outside, operating at the first sampling rate and passing only a signal which exists in low frequencies,
trigonometric function generating means for generating a trigonometric function with a prescribed frequency, and
multiplying means for multiplying an output signal from said low pass filter by the trigonometric function generated in said trigonometric function generating means.

7. The modulator according to claim 1, wherein
said transmission signal is previously band-limited, and
said discrete signal generating means includes
an interpolating filter for interpolating the transmission signal inputted from outside and band-limited and outputting a result at said first sampling rate,
trigonometric function generating means for generating a trigonometric function with a prescribed frequency and outputting the result, and
multiplying means for multiplying an output signal from said interpolating filter by the trigonometric function generated in said trigonometric function generating means.

8. The modulator according to claim 1, wherein
said discrete signal generating means includes
a low pass filter for, when said transmission signal is inputted from outside, passing only a signal which exists in low frequencies,
an interpolating filter for interpolating the output signal from said low pass filter and then outputting the result at said first sampling rate,
trigonometric function generating means for generating a trigonometric function with a prescribed frequency, and
multiplying means for multiplying an output signal from said interpolating filter by the trigonometric function generated in said trigonometric function generating means.

9. The modulator according to claim 1, wherein
said band pass means is composed of an IIR filter, and
when the discrete signal generated in said discrete signal generating means is inputted, said IIR filter operates at said second sampling rate and executes said band selection.

10. The modulator according to claim 1, wherein
said band pass means is composed of a leapflog IIR filter, and
when the discrete signal generated in said discrete signal generating means is inputted, said leapflog IIR filter operates at said second sampling rate and executes said band selection.

11. The modulator according to claim 1, wherein
said band pass means is composed of an FIR filter, and
when the discrete signal generated in said discrete signal generating means is inputted, said FIR filter operates at said second sampling rate and executes said band selection.

12. The modulator according to claim 2, wherein
when said band pass means includes an IIR filter or an FIR filter,
said low pass filter has a frequency pass characteristic capable of compensating a frequency pass characteristic which said IIR filter or said FIR filter has.

13. The modulator according to claim 5, wherein
when said band pass means includes an IIR filter or an FIR filter,
said low pass filter has a frequency pass characteristic capable of compensating a frequency pass characteristic which said IIR filter or said FIR filter has.

14. The modulator according to claim 6, wherein
when said band pass means includes an IIR filter or an FIR filter,
said low pass filter has a frequency pass characteristic capable of compensating a frequency pass characteristic which said IIR filter or said FIR filter has.

15. The modulator according to claim 8, wherein
when the band pass means includes an IIR filter or an FIR filter, said low pass filter has a frequency pass characteristic capable of compensating a frequency pass characteristic which said SIR filter or said FIR filter has.

16. The modulator according to claim 4, wherein
said band pass means multiplies the currently inputted signal by a coefficient stored therein at the time of executing said band selection, and
before said band selection operation is executed, said multiplying means determines said coefficient based on the trigonometric function generated in said trigonometric function generating means and
the coefficient determined in said multiplying means is stored in said band pass means.

17. The modulator according to claim 6, wherein
said band pass means multiplies the currently inputted signal by a coefficient stored therein at the time of executing said band selection, and
before said band selection operation is executed, said multiplying means determines said coefficient based on the trigonometric function generated in said trigonometric function generating means and
the coefficient determined in said multiplying means is stored in said band pass means.

18. The modulator according to claim 7, wherein
said band pass means multiplies the currently inputted signal by a coefficient stored therein at the time of executing said band selection, and
before said band selection operation is executed, said multiplying means determines said coefficient based on the trigonometric function generated in said trigonometric function generating means and
the coefficient determined in said multiplying means is stored in said band pass means.

19. The modulator according to claim 8, wherein
said band pass means multiplies the currently inputted signal by a coefficient stored therein at the time of executing said band selection, and
before said band selection operation is executed, said multiplying means determines said coefficient based on the trigonometric function generated in said trigonometric function generating means and
the coefficient determined in said multiplying means is stored in said band pass means.

20. The modulator according to claim 1, wherein
said discrete signal generating means and said band pass means are both constructed of elements for executing digital signal processing.
